# EUROPEAN PATENT SPECIFICATION

(11) **EP 4 212 586 B1**
(45) Date of publication and mention of the grant of the patent: **18.02.2026**
(21) Application number: 21879500.3
(22) Date of filing: 14.10.2021
(51) Int. Cl.: C08L 29/04, C08L 23/08, C08K 3/10, C08K 5/09, C08K 3/38, C08K 3/32

(54) **ETHYLENE-VINYL ALCOHOL COPOLYMER COMPOSITION AND PREPARATION METHOD THEREFOR**
ETHYLEN-VINYLALKOHOL-COPOLYMERZUSAMMENSETZUNG UND HERSTELLUNGSVERFAHREN DAFÜR
COMPOSITION DE COPOLYMER ÉTHYLÈNE-ALCOOL VINYLIQUE ET PROCÉDÉ DE PRÉPARATION ASSOCIÉ

(30) Priority: 15.10.2020 CN 202011103188
(43) Date of publication of application: 19.07.2023
(73) Proprietor: China Petroleum & Chemical Corporation, Beijing 100728 (CN); Sinopec Chongqing SVW Chemical Co., Ltd., Chongqing 401254 (CN)
(72) Inventor: DOU, Yuqin, Chongqing 401254 (CN); WANG, Qingquan, Chongqing 401254 (CN); HU, Lamei, Chongqing 401254 (CN); HE, Lingzhi, Chongqing 401254 (CN); HUANG, Yingbin, Chongqing 401254 (CN); WANG, Wen, Chongqing 401254 (CN); WAN, Siquan, Chongqing 401254 (CN)
(74) Representative: karo IP
(86) International application number: PCT/CN2021/123864
(87) International publication number: WO 2022/078458

(56) References cited:
- EP-B1- 3 006 501
- WO-A1-02/053639
- CN-A- 104 220 518
- CN-A- 105 579 525
- CN-A- 108 291 070
- CN-A- 110 139 890
- JP-A- S5 641 204

## Description

### CROSS REFERENCE TO RELATED APPLICARTIONS

The present application claims benefit of the Chinese patent application No. "202011103188.4", filed on October 15, 2020.

### TECHNICAL FIELD

The present invention involves with an ethylene-vinyl alcohol copolymer composition and a preparation method therefor.

### BACKGROUND ART

EVOH resins have excellent odor barrier properties, transparency and glossiness, and are resistant to grease, chemicals, ultraviolet light and other radiation rays, and exhibit desirable mechanical properties, strength and tensile modulus, thus can be used as composite packaging films, foaming processes, hollow containers and barrier layers for meat, grease, industrial solvents, pesticides and the like. In addition, the EVOH resins may be compounded with other materials to form the fire-resistant, antibacterial and anti-oxidant materials.

However, the EVOH resins are prone to cause yellowing during melt processing, thus the product quality is influenced.

CN109651557A improves the alcoholysis degree by adding a base catalyst twice for the alcoholysis reaction and controlling dosage of base catalyst added twice for the alcoholysis reaction and the reaction time, thereby reducing the pigment degree of EVOH, the prepared ethylene-vinyl alcohol copolymer has the alcoholysis degree within a range of 99.3-99.7% and a low pigment degree.

EP 3 006 501 B1 relates to a resin composition that achieves superior appearance characteristics such as a color of a film end (or a roll end) after melt molding, film-breaking resistance, blocking resistance, vapor deposition defects-inhibiting properties, and adhesive strength of a vapor deposition layer. The resin composition contains: an ethylene-vinyl alcohol copolymer; inorganic particles; and an aliphatic carbonyl compound having 3 to 8 carbon atoms, in which the content of the inorganic particles is 50 ppm or greater and 5,000 ppm or less, the aliphatic carbonyl compound is at least one selected from the group consisting of a saturated aldehyde, an unsaturated aldehyde and a saturated ketone, and the content of the aliphatic carbonyl compound is 0.01 ppm or greater and 100 ppm or less. The inorganic particles preferably contain a metal element which is at least one selected from the group consisting of silicon, aluminum, magnesium, zirconium, cerium, tungsten and molybdenum.

CN 104 220 518 A provides a resin composition which contains (A) an ethylene-vinyl alcohol copolymer and (B) an unsaturated aldehyde, and wherein the content of the unsaturated aldehyde (B) relative to the resin composition containing an ethylene-vinyl alcohol copolymer is from 0.01 ppm to 100 ppm (inclusive). It is preferable that the unsaturated aldehyde (B) is composed of at least one substance that is selected from the group consisting of crotonaldehyde, 2, 4-hexadienal and 2, 4, 6-octatrienal. It is also preferable that the resin composition additionally contains a boron compound, and the content of the boron compound is from 100 ppm to 5,000 ppm (inclusive). It is also preferable that the resin composition additionally contains a conjugated polyene compound, and the content of the conjugated polyene compound is from 0.01 ppm to 1,000 ppm (inclusive).

CN 105 579 525 A relates to a resin composition having superior long run characteristics in a melt process, having suppressed discoloration and occurrence of defects such as streaks and fisheyes, and able to form a molded article having a superior outer appearance while suppressing the occurrence of odors; a resin molded body; and a multi-layer structure. The resin composition contains an ethylene-vinyl alcohol copolymer (A) and a saturated carbonyl compound (B) having 3-8 carbon atoms inclusive. The saturated carbonyl compound (B) is a saturated aldehyde (B-1), a saturated ketone (B-2), or a combination of same, and the amount contained of the saturated carbonyl compound (B) is 0.01 ppm to 100 ppm inclusive. Propanol, butanol, hexanol, or a combination thereof is preferable as the saturated aldehyde (B-1). Acetone, methyl ethyl ketone, 2-hexanone, or a combination thereof is preferable as the saturated ketone (B-2).

CN 110 139 890 A provides ethylene-vinyl alcohol copolymer composition pellets that make it possible to suppress the occurrence of miniscule fish eyes having a diameter of 200 [mu]m or less to an extremely high level and that contain a conjugated polyene, said ethylene-vinyl alcohol copolymer composition pellets being characterized by containing a specific proportion of least one fish eye-suppressing component and by the content of the conjugated polyene in a pellet surface layer section being 30 ppb or more by weight with respect to the pellets.

CN 108 291 070 A discloses EVOH resin pellets which can reduce the occurrence of fisheyes in a melt molded article of an EVOH resin. The occurrence of fisheyes in a melt molded article such as a filmthat is produced by melt molding using pellets can be suppressed by setting the abundance of a conjugated polyene in the surface layer parts of the pellets to a predetermined amount or more.

### SUMMARY OF THE INVENTION

The invention aims to overcome the defect in the prior art that the EVOH resin composition is prone to yellowing under the high temperature, thereby provide an EVOH resin composition having a higher yellowing resistance and a preparation method therefor.

According to a first aspect, the invention provides an ethylene-vinyl alcohol copolymer composition, the composition includes an ethylene-vinyl alcohol copolymer, an alkali metal element and a carboxyl-containing material, characterized in that the carboxyl-containing material includes a mono-saturated carboxylic acid and a carboxylic acid containing a carbon-carbon double bond as defined in claim 1.

According to a second aspect, the invention provides a preparation method of the ethylene-vinyl alcohol copolymer composition as defined in claim 7, the method comprises subjecting the ethylene-vinyl acetate copolymer obtained from the polymerization reaction to an alcoholysis with an alkali metal hydroxide and molding granulation, followed by a water scrubbing and an acid pickling sequentially, characterized in that the acid used in the acid pickling comprises a mono-saturated carboxylic acid and a carboxylic acid containing a carbon-carbon double bond.

The present invention can improve the yellowing resistance of an EVOH resin composition by making the EVOH resin composition contain both a mono-saturated carboxylic acid such as acetic acid and a carboxylic acid containing a carbon-carbon double bond. After heat treatment at 210°C for 0.5 h, the yellowing index YI does not exceed 20 and the increase does not exceed 15.

The preparation process of the EVOH resin composition provided by the present invention is simple and easy to operate, it is conducive to the industrial production.

### DESCRIPTION OF THE PREFERRED EMBODIMENT

The ethylene-vinyl alcohol copolymer composition, comprising ethylene-vinyl alcohol copolymer as the main ingredient, is obtained by alcoholysis after copolymerization of the ethylene-vinyl acetate; wherein the element sodium is brought from a byproduct produced during alcoholysis of ethylene-vinyl acetate copolymer, the content of element sodium is usually reduced by the subsequent process of water scrubbing and acid pickling. The acid used for the acid pickling is generally acetic acid at present.

The present inventors have surprisingly discovered that by using both a mono-saturated carboxylic acid and a carboxylic acid containing a carbon-carbon double bond (also known as unsaturated carboxylic acid) in an acid pickling process, the yellowing resistance of the composition can be improved, such that the yellowing index (YI) of a melt processed product is not significantly higher than that prior to the processing, thus the YI is lower than that of the existing EVOH melt processed product.

According to the invention, a weight ratio of the mono-saturated carboxylic acid and the carboxylic acid containing a carbon-carbon double bond is 1:0.1-1, preferably 1:0.4-0.7.

In the invention, the content of mono-saturated carboxylic acid, phosphate radical, and carboxylic acid containing a carbon-carbon double bond was detected by an ion chromatography. The specific testing method was as follows: the EVOH sample was crushed and passed through a 100 mesh sieve, 10g of sample and 50ml of deionized water were weighted, and subjected to stirring and reflux extraction in water bath of 95°C for 10 hours. The extracted solution was diluted 5 times (by volume) with deionized water, the testing was performed by using an ion chromatography, wherein the chromatographic column was Metrosep A Supp/250,4 the mobile phase was a mixed solution of Na₂CO₃ and NaHCO₃, the calibration fluid was an aqueous solution of sodium acetate.

Preferably, the mono-saturated carboxylic acid is contained in an amount of 50-2,000ppm, more preferably 100-1,500ppm, further preferably 200-800ppm, relative to the mass of ethylene-vinyl alcohol copolymer; the carboxylic acid containing a carbon-carbon double bond is contained in an amount of 20-2,000ppm, more preferably 50-1,000ppm, further preferably 150-250ppm,, relative to the mass of ethylene-vinyl alcohol copolymer.

In the present disclosure, the carboxylic acid containing a carbon-carbon double bond may comprise one or more carboxyl, the carboxylic acid may comprise one or more carbon-carbon double bond, and further comprise one or more hydroxyl. In the present disclosure, the carboxylic acid containing a carbon-carbon double bond may comprise 3-10 carbon atoms. In the present invention, the carboxylic acid is one or more selected from the group consisting of sorbic acid, 2-hexenoic acid, 3-hexenoic acid, butenedioic acid, vinylacetic acid, vinylpropionic acid, vinylglycolic acid and cinnamic acid.

In the present disclosure, the mono-saturated carboxylic acid may be a variety of materials containing one carboxyl -COOH and an unsaturated carbon-carbon double bond, preferably a mono-saturated carboxylic acid having 1-8 carbon atoms, more preferably 1-5 carbon atoms. In the present invention, the mono-saturated carboxylic acid is one or more of formic acid, acetic acid, propionic acid, butyric acid and valeric acid.

The present inventors have also surprisingly discovered that the heat resistance of the prepared EVOH resin composition can be greatly improved by adding the element potassium after contacting with an acid, and controlling the mass ratio of element sodium to element potassium within a specific range of 0.1:1 to 1:1, preferably 0.2:1 to 0.8:1, more preferably 0.2:1 to 0.5:1. It has been demonstrated by experiments that by controlling the content of element potassium within the above range, the initial decomposition temperature of EVOH resin composition can be increased to 380-390°C, the maximum decomposition temperature can be increased to 420°C or more, and the ethylene-vinyl alcohol copolymer can be adapted to the process requirement for a higher processing temperature.

The better effects can be obtained by controlling the content of element sodium within a certain range. The total amount of element sodium and element potassium is 100-3,000ppm, preferably 200-2,000ppm, further preferably 800-1,200ppm, relative to the mass of ethylene-vinyl alcohol copolymer.

In the present invention, the contents of element potassium and element sodium were measured by an Inductively Coupled Plasma Atomic Emission Spectrometer (ICP-0ES). The specific testing method was as follows: an EVOH sample was crushed and passed through a 500 mesh sieve, 10g of sample and 50ml of ion exchange water were weighted, and subjected to stirring and reflux extraction in water bath of 95°C for 10 hours. The extracted solution was diluted 5 times (by volume) with ion exchange water, and tested using an ICP-0ES.

Preferably, the element potassium is present in an ionic form, more preferably in the form of a potassium salt, and further preferably the potassium salt is potassium carbonate and/or potassium bicarbonate. Potassium carbonate and potassium bicarbonate can achieve superior resistance to high temperature yellowing than the inorganic potassium salt (e.g., potassium nitrate, potassium phosphate, potassium diphydrogen phosphate, dipotassium phosphate, potassium sulfate, potassium chloride) and the organic potassium salts (e.g., potassium acetate, potassium formate).

According to a preferred embodiment of the invention, the EVOH resin composition comprises an ethylene-vinyl alcohol copolymer, a carboxyl-containing material, a potassium salt and a sodium salt, wherein the carboxyl-containing material contains an acetic acid and carboxylic acid containing a carbon-carbon double bond, wherein the carboxylic acid containing a carbon-carbon double bond comprises one or more selected from the group consisting of sorbic acid, 2-hexenoic acid, 3-hexenoic acid, butenedioic acid, vinylacetic acid, vinylpropionic acid, vinylglycolic acid and cinnamic acid; the content of acetic acid is 50-2,000ppm by mass relative to the ethylene-vinyl alcohol copolymer; the content of carboxylic acid containing a carbon-carbon double bond is 20-2,000ppm by mass relative to the ethylene-vinyl alcohol copolymer; the total amount of potassium salt and sodium salt (i.e., the total amount of potassium ions and sodium ions contained in the potassium salt and sodium salt) is 200-3,000ppm by mass relative to the mass of ethylene-vinyl alcohol copolymer; and the mass ratio of sodium ions contained in the sodium salt to potassium ions contained in the potassium salt is 0.1:1 to 1:1.

In order to prevent the EVOH resin composition from coloring during the melt molding process, according to a preferred embodiment of the present invention, the EVOH resin composition may further comprise an element boron and/or an element phosphorus. The element boron may be any boron-based compound, such as boric acid, borate esters, borate; preferably one or more selected from the group consisting of orthoboric acid (i.e., commonly known boric acid), metaboric acid, tetraboric acid, sodium metaborate, potassium metaborate, sodium tetraborate, sodium pentaborate, lithium borate, borax, trimethyl borate, triethyl borate, most preferably boric acid.

Preferably, the content of element boron calculated in terms of boric acid H₃BO₃ is 50-1,000ppm, preferably 300-500ppm, relative to the mass of ethylene-vinyl alcohol copolymer. By arranging the content of element boron within this range, the heat resistance yellowing resistance of an EVOH resin composition are greatly improved, and the adverse effect on the melt-processing process can be effectively avoided.

It is further preferred that the EVOH resin composition further comprises a phosphorus compound in an amount of 200-1,000ppm, preferably 500-800ppm calculated in terms of phosphoric acid H₃PO₄. The phosphorus compound may be various phosphates such as alkali metal salts of phosphoric acid, alkaline earth metal salts of phosphoric acid; in particular, the phosphorus compound may be one or more of potassium phosphate, sodium phosphate, ammonium phosphate, diammonium phosphate, ammonium dihydrogen phosphate, dipotassium phosphate, disodium phosphate, potassium dihydrogen phosphate, sodium dihydrogen phosphate. It should be noted that when the phosphorus compound is various potassium salt of phosphoric acid, the amount of potassium thereof is included in the content of element potassium in the composition.

In the present invention, the ethylene-vinyl acetate copolymer may be EVOH copolymer obtained by various specifications and processes, and preferably, the ethylene-vinyl acetate copolymer has a melt index (190°C, 2160g) of 0.5-10g/10 min.

The ethylene-vinyl acetate copolymer can be prepared with the conventional method in the prior art, for example, it may be prepared through the polymerization reaction; the solvent used in the polymerization reaction is an alcohol solvent, and the initiator used in the polymerization reaction is preferably an azo type initiator or a peroxide type initiator.

A second aspect of the present invention provides a preparation method of the ethylene-vinyl alcohol copolymer composition as defined in claim 7, the method comprises subjecting the ethylene-vinyl acetate copolymer obtained from the polymerization reaction to an alcoholysis with an alkali metal hydroxide and molding granulation, followed by a water scrubbing and an acid pickling sequentially, characterized in that the acid used in the acid pickling comprises a mono-saturated carboxylic acid and a carboxylic acid containing a carbon-carbon double bond.

The water scrubbing and acid pickling may reduce the content of element sodium to 50-2,000ppm.

In general, the acid pickling is performed by formulating the acid into an aqueous solution with a certain concentration, followed by contacting with granules of the ethylene-vinyl acetate copolymer. Typically, the weight of acid pickling solution is 2-5 times of the weight of the granules of ethylene-vinyl acetate copolymer.

Preferably, the mono-saturated carboxylic acid is used in an amount of 0.001-0.05 parts by weight, preferably 0.005-0.03 parts by weight, and the carboxylic acid containing a carbon-carbon double bond is used in an amount of 0.001-0.015 parts by weight, preferably 0.001-0.01 parts by weight, relative to 1 part by weight of an ethylene-vinyl alcohol copolymer.

When the alkali metal hydroxide used for alcoholysis is sodium hydroxide, the temperature decomposition resistance of the resin product can be improved by further adding a potassium source after the washing process, such that the prepared EVOH resin composition comprises an element potassium. Preferably, the potassium source is a potassium salt, and further preferably the potassium salt is one or more selected from the group consisting of potassium carbonate, potassium bicarbonate, potassium phosphate, potassium hydrogen phosphate, potassium dihydrogen phosphate and dipotassium hydrogen phosphate.

Preferably, the dosage of potassium source is 0.001-0.003 times of the mass of ethylene-vinyl alcohol copolymer.

According to a preferred embodiment of the present invention, the method further comprises adding a phosphorus-containing compound and/or a boron-containing compound to the ethylene-vinyl acetate copolymer after the acid pickling process.

Preferably, the boron-containing compound is added in an amount such that the content of element boron calculated in terms of boric acid H₃BO₃ is 50-1,000ppm, more preferably 300-500ppm, relative to the mass of ethylene-vinyl alcohol copolymer.

Preferably, the phosphorous-containing compound is added in an amount such that the content of element phosphorus calculated in terms of H₃PO₄ is 200-1,000ppm, more preferably 500-800ppm, relative to the mass of ethylene-vinyl alcohol copolymer.

The boron source and/or the phosphorous source may be added together with the potassium source, or may be added sequentially to obtain a composition containing element potassium, element boron and element phosphorous. The manner of adding the potassium salt, the boron-containing compound, and the phosphorus-containing compound is not particularly limited herein, it is preferable that the compounds are dissolved with water, the solution is then added into the ethylene-vinyl alcohol copolymer and mixed uniformly. The concentration of said solution is not particularly limited herein, it may be various concentrations as long as the potassium salt, the boron-containing compound and the phosphorus-containing compound can be loaded onto the ethylene-vinyl alcohol copolymer. Since the ethylene-vinyl alcohol copolymer has a certain pore structure, the potassium salt, the boron-containing compound and the phosphorus-containing compound can be loaded onto the ethylene-vinyl alcohol copolymer by using a saturated impregnation method, the solvent is then removed by drying, such that the ethylene-vinyl alcohol copolymer composition is prepared.

The kinds of boron source, phosphorous source, potassium source are as described above.

Various methods known in the prior art may be used for preparing the ethylene-vinyl acetate copolymer through the polymerization reaction, the methods may be solution polymerization method, emulsion polymerization method or suspension polymerization method, the solution polymerization method is preferred. Preferably, the solvent used in the polymerization reaction is an alcohol solvent. The alcohol solvent may be an alcohol containing 1-4 carbon atoms, such as methanol, ethanol, propanol, ethylene glycol, n-butanol, t-butanol, or a mixed solvent of the two alcohols, or the alcohol comprising said alcohol as the main ingredient and further comprising small amount of other ingredients.

The initiator used in the polymerization reaction may be an azo type initiator or a peroxide type initiator.

Further, the azo type initiator includes an oil-soluble initiator, such as azobisisobutyronitrile, azobisisovaleronitrile, 1-((cyano-1-methylethyl)azo)formamide, 1,1'-azobis(4-cyclohexane carbonitrile),
dimethyl 2,2'-azobis(2-methylpropionate).

Further, the peroxide type initiator includes an organic peroxide (e.g., benzoyl peroxide, tert-butyl benzoyl peroxide ester, methyl ethyl ketone peroxide, diisobutyryl peroxide, tert-amyl peroxydecanoate, bis (4-tert-butylcyclohexyl) peroxydicarbonate, tert-amyl peroxypivalate, tert-butyl peroxyacetate, dibutyl peroxydicarbonate) or an inorganic peroxide (e.g., hydrogen peroxide, ammonium persulfate, potassium persulfate).

Further, the initiator comprises an organic peroxy-based initiator.

Further, the proportioning relations in parts by mass are as follows: 10-40 parts of solvent, 60-200 parts of vinyl acetate monomer, 0.01-0.3 parts of initiator, and 5-60 parts of ethylene monomer.

Furthermore, the proportioning relations in parts by mass are as follows: 10-35 parts of the solvent, 80-150 parts of the vinyl acetate monomer, 0.03-0.2 parts of the initiator, and 20-40 parts of the ethylene monomer.

The alcoholysis and the molding granulation processes are generally known among those skilled in the art, the content will not be repeated herein.

The invention will be further described in detail below with reference to the examples.

The contents of sodium and potassium ions were measured with the following method: an EVOH sample was crushed and passed through a sieve, 10g of sample and 50ml of ion exchange water were weighted, and subjected to stirring and reflux extraction in water bath of 95°C for 10 hours. The extracted solution was diluted 5 times (by volume) with ion exchange water, and tested using an ICP-0ES.

The contents of the monocarboxylic acid, the carboxylic acid containing a carbon-carbon double bond and the phosphate radical were measured with the following method: the sample was crushed and passed through a 100 mesh sieve, 10g of sample and 50ml of deionized water were weighted, and subjected to stirring and reflux extraction in water bath of 95°C for 10 hours. The extracted solution was diluted 5 times (by volume) with deionized water, the testing was performed by using an ion chromatography, wherein the chromatographic column was Metrosep A Supp/250,4 the mobile phase was a mixed solution of Na₂CO₃ and NaHCO₃, the calibration fluid was an aqueous solution of sodium acetate.

The testing method of element boron was as follows: 100g of sample was weighted, it was ashed in a muffle furnace, then the ash was dissolved in 200ml of aqueous nitric acid solution with a concentration of 0.01 equivalent, the content of element boron was analyzed by using an atomic absorption spectrum, the content was converted into the weight of boric acid.

The initial decomposition temperature and the maximum decomposition temperature were measured with the following methods: a thermogravimetric analyzer was used, the temperature was raised from room temperature to 800°C at a temperature-rise rate of 10°C/min in a nitrogen gas atmosphere; the temperature when 5% (w) of the sample was decomposed was denoted as the initial decomposition temperature T₀ (°C), and the temperature when 50% (w) of the sample was decomposed was denoted as the maximum decomposition temperature T₁ (°C).

The measuring method of the Yellowness Index (YI) was as follows: 10-15g of the sample was weighted, the initial yellowness index and the yellowness index (YI) after 0.5-hour thermal treatment at 210°C of the sample were tested with a colorimeter. A smaller value of YI indicated a lower value of yellowness.

Unless otherwise specified in the present invention, the parts are referred to as parts by mass.

### Example 1

A. polymerization: 16 parts of methanol, 80 parts of vinyl acetate, 0.01 parts of azobisisobutyronitrile were added into a polymerization kettle provided with a stirrer, the ethylene was introduced to maintain the pressure in the polymerization kettle at 3.7MPa, the polymerization reaction was performed at a temperature of 65°C for 5h, an ethylene-vinyl acetate copolymer solution was obtained. The ethylene and vinyl acetate monomers were removed by reducing the pressure and distillation to obtain an ethylene-vinyl acetate copolymer solution.

B. alcoholysis: the ethylene-vinyl acetate copolymer solution obtained in step A was adjusted to have a mass fraction of 40%, a sodium hydroxide-methanol solution (sodium hydroxide was used as a solute) with a concentration of 40g/L was then added and subjected to alcoholysis, the sodium hydroxide-methanol solution is used in an amount such that a molar ratio of sodium hydroxide in the sodium hydroxide-methanol solution to vinyl acetate groups contained in the ethylene-vinyl acetate copolymer was 0.05:1, the reaction was performed for 4 hours till the completion of alcoholysis.

C. granulation: after the ethylene vinyl acetate copolymer was subjected to alcoholysis, the obtained ethylene vinyl alcohol copolymer solution passed through an extrusion device with a perforated plate and was extruded into an aqueous solution with a temperature of 5°C, the copolymer was precipitated and formed a strip shape, which was subsequently cut into granules in a conventional cutting pattern.

D. water scrubbing: the ethylene-vinyl alcohol copolymer granules were subsequently scrubbed in a kettle vessel provided with a stirring device by adding 5 times of water by mass, each time of water scrubbing was implemented for 2 hours, the water scrubbing was repeated for 2 times.

E. acid pickling: the ethylene-vinyl alcohol copolymer granules were washed in a kettle vessel provided with a stirring device by adding 5 times of water by mass, 0.015 parts by mass of propionic acid and 0.007 parts by mass of sorbic acid relative to the EVOH (1 part by mass) were added into the water scrubbing solution, in order to perform the acid pickling for 2 hours, the centrifugal dewatering was carried out after completion of the acid pickling process.

F. conditioning: the EVOH granules after centrifugal dewatering were then added with an aqueous solution comprising 0.0015 parts of potassium carbonate, 0.001 parts of boric acid and 0.001 parts of potassium dihydrogen phosphate relative to the EVOH (1 part by mass), mixed thoroughly and uniformly and subjected to the saturation impregnation, followed by drying treatment at 115°C for 24 hours, the EVOH resin composition was prepared.

### Examples 2, 3, 5 to 10 and Reference Example 4

The EVOH resin composition was prepared according to the method in Example 1, except that the kinds and used amounts of the monocarboxylic acids, the carboxylic acid containing an unsaturated carbon-carbon double bond, the phosphorus source, the boron sources and the potassium sources in steps E and F were as shown in Table 1, and the properties of the prepared EVOH resin composition were as shown in Table 2.

### Comparative Example 1 - Comparative Example 3

The EVOH resin composition was prepared according to the method in Example 1, except that the kinds and used amounts of the monocarboxylic acids, the carboxylic acid containing an unsaturated double bond, and the potassium sources in steps E and F were as shown in Table 1, and the properties of the prepared EVOH resin composition were as shown in Table 2.

**Table 1**

| | Saturated carboxylic acid | Unsaturated carboxylic acid | Boron source | Phosphorus source | Potassium source |
|---|---|---|---|---|---|
| Example 1 | 0.015 parts of propionic acid | 0.007 parts of sorbic acid | 0.001 parts of boric acid | 0.001 parts of monopotassium phosphate | 0.0015 parts of potassium carbonate |
| Example 2 | 0.02 parts of acetic acid | 0.007 parts of vinylpropionic acid | 0.0008 parts of metaboric acid | 0.0008 parts of phosphoric acid | 0.0017 parts of potassium bicarbonate |
| Example 3 | 0.02 parts of acetic acid | 0.005 parts of vinylacetic acid | 0.0006 parts of boric acid | 0.0012 parts of monopotassi um phosphate | 0.0007 parts of potassium carbonate |
| Reference Example 4 | 0.02 parts of acetic acid | 0.005 parts of vinylacetic acid | 0.0006 parts of boric acid | 0.0012 parts of monopotassi um phosphate | - |
| Example 5 | 0.02 parts of acetic acid | 0.005 parts of vinylacetic acid | - | 0.0012 parts of monopotassi um phosphate | 0.0007 parts of potassium carbonate |
| Example 6 | 0.02 parts of acetic acid | 0.005 parts of vinylacetic acid | 0.0022 parts of boric acid | 0.0012 parts of monopotassi um phosphate | 0.0007 parts of potassium carbonate |
| Example 7 | 0.02 parts of acetic acid | 0.005 parts of vinylacetic acid | 0.0006 parts of boric acid | - | 0.0007 parts of potassium carbonate |
| Example 8 | 0.015 parts of acetic acid | 0.004 parts of vinylpropion ic acid | - | - | 0.002 parts of potassium carbonate |
| Comparative Example 1 | 0.015 parts of acetic acid | - | - | - | 0.002 parts of potassium carbonate |
| Example 9 | 0.015 parts of acetic acid | 0.004 parts of butenoic acid | - | - | 0.0021 parts of potassium bicarbonate |
| Comparative Example 2 | 0.005 parts of acetic acid | - | - | - | 0.0017 parts of potassium bicarbonate |
| Example 10 | 0.02 parts of acetic acid | 0.004 parts of sorbic acid | - | - | 0.0025 parts of potassium bicarbonate |
| Comparative Example 3 | 0.005 parts of acetic acid | - | - | - | 0.002 parts of potassium bicarbonate |

**Table 2**

| | Satur ated carbo xylic acid, ppm | Unsatu rated carbox ylic acid, ppm | Na, ppm | K, ppm | B, ppm | P, ppm | T₀, °C | T₁, °C | Yellowness Index (YI) | |
|---|---|---|---|---|---|---|---|---|---|---|
| | | | | | | | | | Bef ore the ther mal trea tment | After the ther mal treat ment |
| Example 1 | 300 | 200 | 300 | 610 | 500 | 200 | 390 | 423 | 5 | 15 |
| Example 2 | 400 | 200 | 180 | 900 | 400 | 400 | 395 | 432 | 5 | 14 |
| Example 3 | 400 | 180 | 240 | 730 | 300 | 500 | 392 | 425 | 6 | 13 |
| Reference Example 4 | 400 | 180 | 240 | - | 300 | 500 | 380 | 398 | 9 | 18 |
| Example 5 | 400 | 180 | 240 | 730 | - | 500 | 382 | 400 | 8 | 19 |
| Example 6 | 400 | 180 | 240 | 730 | 1000 | 500 | 385 | 401 | 7 | 17 |
| Example 7 | 400 | 180 | 240 | 730 | 300 | - | 379 | 399 | 8 | 18 |
| Example 8 | 350 | 100 | 500 | 800 | - | - | 362 | 403 | 9 | 18 |
| Compara tive Example 1 | 350 | - | 750 | 800 | - | - | 290 | 364 | 18 | 34 |
| Example 9 | 300 | 120 | 600 | 900 | - | - | 350 | 390 | 12 | 22 |
| Compara tive Example 2 | 100 | - | 1200 | 700 | - | - | 301 | 370 | 15 | 32 |
| Example 10 | 400 | 100 | 400 | 1000 | - | - | 370 | 423 | 7 | 19 |
| Compara tive Example 3 | 100 | 20 | 1200 | 800 | - | - | 297 | 358 | 17 | 33 |

As can be seen from the data of Table 2 mentioned above, the thermal yellowing resistance of EVOH resin composition can be improved by adding a carboxylic acid containing a carbon-carbon double bond; in addition, both the heat resistance and the thermal yellowing resistance of EVOH resin composition can be improved by simultaneously controlling the content of potassium salt and sodium salt within a certain range.

## Claims

1. An ethylene-vinyl alcohol copolymer composition, the composition includes an ethylene-vinyl alcohol copolymer, an alkali metal element and a carboxyl-containing material, **characterized in that** the carboxyl-containing material includes a mono-saturated carboxylic acid and a carboxylic acid containing a carbon-carbon double bond;
the alkali metal element is element potassium and element sodium, wherein the total amount of element potassium and element sodium is 100-3,000ppm, relative to the mass of ethylene-vinyl alcohol copolymer;
a weight ratio of the mono-saturated carboxylic acid and the carboxylic acid containing a carbon-carbon double bond is 1:0.1-1;
the mass ratio of element sodium to element potassium is 0.1:1 to 1:1;
the content of mono-saturated carboxylic acid and carboxylic acid containing a carbon-carbon double bond were detected by an ion chromatography as described in the description;
the contents of element potassium and element sodium were measured by an Inductively Coupled Plasma Atomic Emission Spectrometer (ICP-0ES) as described in the description;
the carboxylic acid containing a carbon-carbon double bond is one or more selected from the group consisting of sorbic acid, 2-hexenoic acid, 3-hexenoic acid, butenedioic acid, vinylacetic acid, vinylpropionic acid, vinylglycolic acid and cinnamic acid;
the mono-saturated carboxylic acid is one or more selected from the group consisting of formic acid, acetic acid, propionic acid, butyric acid and valeric acid.

2. The composition according to claim 1, wherein a weight ratio of the mono-saturated carboxylic acid and the carboxylic acid containing a carbon-carbon double bond is 1:0.4-0.7.

3. The composition according to claim 1 or 2, wherein the mono-saturated carboxylic acid is contained in an amount of 50-2,000ppm, preferably 200-800ppm, relative to the mass of ethylene-vinyl alcohol copolymer; the carboxylic acid containing a carbon-carbon double bond is contained in an amount of 20-2,000ppm, preferably 150-250ppm, relative to the mass of ethylene-vinyl alcohol copolymer.

4. The composition according to any one of claims 1-3, wherein the total amount of element potassium and element sodium is 800-1,200ppm, relative to the mass of ethylene-vinyl alcohol copolymer.

5. The composition according to claim 4, wherein the mass ratio of element sodium to element potassium is 0.2:1 to 0.5:1.

6. The composition according to any one of claims 1-5, wherein the composition further comprises element boron and/or element phosphorus; the content of element boron calculated in terms of boric acid H₃BO₃ is 50-1,000ppm, preferably 300-500ppm, and the content of element phosphorus calculated in terms of H₃PO₄ is 200-1,000ppm, preferably 500-800ppm, relative to the mass of ethylene-vinyl alcohol copolymer;
the contents of element boron was measured by an atomic absorption spectrum as described in the description;
the content of phosphate radical was detected by an ion chromatography as described in the description.

7. A preparation method of the ethylene-vinyl alcohol copolymer composition, the method comprises subjecting the ethylene-vinyl acetate copolymer obtained from the polymerization reaction to an alcoholysis with an alkali metal hydroxide and molding granulation, followed by a water scrubbing and an acid pickling sequentially, **characterized in that** the acid used in the acid pickling comprises a mono-saturated carboxylic acid and a carboxylic acid containing a carbon-carbon double bond;
the alkali metal hydroxide used for alcoholysis is sodium hydroxide, the method further comprises adding a potassium salt to the ethylene-vinyl acetate copolymer after the acid pickling process, the potassium salt is added in an amount such that a total amount of element potassium and element sodium is 100-3,000ppm;
the potassium salt is added in an amount such that the mass ratio of element sodium to element potassium is 0.1:1 to 1:1;
a weight ratio of the mono-saturated carboxylic acid and the carboxylic acid containing a carbon-carbon double bond is 1:0.1-1;
the content of mono-saturated carboxylic acid and carboxylic acid containing a carbon-carbon double bond were detected by an ion chromatography as described in the description;
the contents of element potassium and element sodium were measured by an Inductively Coupled Plasma Atomic Emission Spectrometer (ICP-0ES) as described in the description;
the carboxylic acid containing a carbon-carbon double bond is one or more selected from the group consisting of sorbic acid, 2-hexenoic acid, 3-hexenoic acid, butenedioic acid, vinylacetic acid, vinylpropionic acid, vinylglycolic acid and cinnamic acid;
the mono-saturated carboxylic acid is one or more selected from the group consisting of formic acid, acetic acid, propionic acid, butyric acid and valeric acid.

8. The preparation method according to claim 7, wherein a weight ratio of the mono-saturated carboxylic acid and the carboxylic acid containing a carbon-carbon double bond is 1:0.2-0.8.

9. The preparation method according to claim 7 or 8, wherein the mono-saturated carboxylic acid is used in an amount of 0.001-0.05 parts by weight and the carboxylic acid containing a carbon-carbon double bond is used in an amount of 0.001-0.01 parts by weight, relative to 1 part by weight of an ethylene-vinyl alcohol copolymer.

10. The preparation method according to any one of claims 7-9, wherein the potassium salt is added in an amount such that a total amount of element potassium and element sodium is 800-1,200ppm, relative to the mass of ethylene-vinyl alcohol copolymer.

11. The preparation method according to claim 10, wherein the potassium salt is added in an amount such that the mass ratio of element sodium to element potassium is 0.2:1 to 0.5:1.

12. The preparation method according to claim 10 or 11, wherein the method further comprises adding a phosphorus-containing compound and/or a boron-containing compound to the ethylene-vinyl acetate copolymer after the acid pickling process; preferably the phosphorus-containing compound and the boron-containing compound are added in an amount such that the content of element boron calculated in terms of boric acid H₃BO₃ is 50-1,000ppm, more preferably 300-500ppm, and the content of element phosphorus calculated in terms of H₃PO₄ is 200-1,000ppm, more preferably 500-800ppm, relative to the mass of ethylene-vinyl alcohol copolymer;
the contents of element boron was measured by an atomic absorption spectrum as described in the description;
the content of phosphate radical was detected by an ion chromatography as described in the description.

## Patentansprüche

1. Ethylen-Vinylalkohol-Copolymerzusammensetzung, wobei die Zusammensetzung ein Ethylen-Vinylalkohol-Copolymer, ein Alkalimetallelement und ein carboxylhaltiges Material einschließt, **dadurch gekennzeichnet, dass** das carboxylhaltige Material eine gesättigte Monocarbonsäure und eine Carbonsäure, die eine Kohlenstoff-Kohlenstoff-Doppelbindung enthält, einschließt;
das Alkalimetallelement das Element Kalium und das Element Natrium ist, wobei die Gesamtmenge des Elements Kalium und des Elements Natrium 100 bis 3000 ppm, bezogen auf die Masse des Ethylen-Vinylalkohol-Copolymers, beträgt;
ein Gewichtsverhältnis von der gesättigten Monocarbonsäure zu der Carbonsäure, die eine Kohlenstoff-Kohlenstoff-Doppelbindung enthält, 1:0,1-1 beträgt;
das Massenverhältnis von Element Natrium zum Element Kalium 0,1:1 bis 1:1 beträgt;
der Gehalt an gesättigter Monocarbonsäure und der Carbonsäure, die eine Kohlenstoff-Kohlenstoff-Doppelbindung enthält, wurde durch Ionenchromatographie, wie in der Beschreibung angegeben, nachgewiesen;
der Gehalt an Element Kalium und Element Natrium wurde mit einem induktiv gekoppelten Plasma-Atomemissionsspektrometer (ICP-OES), wie in der Beschreibung angegeben, gemessen;
die Carbonsäure, die eine Kohlenstoff-Kohlenstoff-Doppelbindung enthält, ist eine oder mehrere aus der Gruppe ausgewählt, die aus Sorbinsäure, 2-Hexensäure, 3-Hexensäure, Butendisäure, Vinylessigsäure, Vinylpropionsäure, Vinylglykolsäure und Zimtsäure besteht; die gesättigte Monocarbonsäure ist eine oder mehrere aus der Gruppe ausgewählt, die aus Ameisensäure, Essigsäure, Propionsäure, Buttersäure und Valeriansäure besteht.

2. Zusammensetzung nach Anspruch 1, wobei ein Gewichtsverhältnis der gesättigten Monocarbonsäure zu der Carbonsäure, die eine Kohlenstoff-Kohlenstoff-Doppelbindung enthält, 1:0,4-0,7 beträgt.

3. Zusammensetzung nach Anspruch 1 oder 2, wobei die gesättigte Monocarbonsäure in einer Menge von 50-2000 ppm, vorzugsweise 200-800 ppm, bezogen auf die Masse des Ethylen-Vinylalkohol-Copolymers, enthalten ist; die Carbonsäure, die eine Kohlenstoff-Kohlenstoff-Doppelbindung enthält, in einer Menge von 20-2000 ppm, vorzugsweise 150-250 ppm, bezogen auf die Masse des Ethylen-Vinylalkohol-Copolymers, enthalten ist.

4. Zusammensetzung nach einem der Ansprüche 1 bis 3, wobei die Gesamtmenge des Elements Kalium und des Elements Natrium 800-1200 ppm, bezogen auf die Masse des Ethylen-Vinylalkohol-Copolymers, beträgt.

5. Zusammensetzung nach Anspruch 4, wobei das Massenverhältnis von Element Natrium zu Element Kalium 0,2:1 bis 0,5:1 beträgt.

6. Zusammensetzung nach einem der Ansprüche 1 bis 5, wobei die Zusammensetzung ferner das Element Bor und/oder das Element Phosphor umfasst; der Gehalt an Element Bor, berechnet als Borsäure H₃BO₃, 50-1000 ppm, vorzugsweise 300-500 ppm, beträgt und der Gehalt an Element Phosphor, berechnet als H₃PO₄, 200-1000 ppm, vorzugsweise 500-800 ppm, beträgt, bezogen auf die Masse des Ethylen-Vinylalkohol-Copolymers;
der Gehalt an Element Bor wurde mittels Atomabsorptionsspektroskopie gemessen, wie in der Beschreibung angegeben;
der Gehalt an Phosphatradikalen wurde mittels Ionenchromatographie nachgewiesen, wie in der Beschreibung angegeben.

7. Herstellungsverfahren für die Ethylen-Vinylalkohol-Copolymerzusammensetzung, wobei das Verfahren umfasst, dass das aus der Polymerisationsreaktion erhaltene Ethylen-Vinylacetat-Copolymer einer Alkoholyse mit einem Alkalimetallhydroxid und einer Formgranulierung unterzogen wird, gefolgt von einer Wasserwäsche und einer Säurebeize in aufeinanderfolgender Reihenfolge, **dadurch gekennzeichnet, dass** die in der Säurebeize verwendete Säure eine gesättigte Monocarbonsäure und eine Carbonsäure, die eine Kohlenstoff-Kohlenstoff-Doppelbindung enthält, umfasst;
das für die Alkoholyse verwendete Alkalimetallhydroxid Natriumhydroxid ist, das Verfahren ferner umfasst, dass dem Ethylen-Vinylacetat-Copolymer nach dem Säurebeizprozess ein Kaliumsalz zugesetzt wird, wobei das Kaliumsalz in einer solchen Menge zugesetzt wird, dass die Gesamtmenge an Element Kalium und Element Natrium 100-3000 ppm beträgt; das Kaliumsalz in einer solchen Menge zugegeben wird, dass das Massenverhältnis von Element Natrium zu Element Kalium 0,1:1 bis 1:1 beträgt;
ein Gewichtsverhältnis von der gesättigten Monocarbonsäure zu der Carbonsäure, die eine Kohlenstoff-Kohlenstoff-Doppelbindung enthält, 1:0,1-1 beträgt;
der Gehalt an gesättigter Monocarbonsäure und Carbonsäure, die eine Kohlenstoff-Kohlenstoff-Doppelbindung enthält, wurde durch Ionenchromatographie, wie in der Beschreibung angegeben, nachgewiesen;
der Gehalt an Element Kalium und Element Natrium wurde mit einem induktiv gekoppelten Plasma-Atomemissionsspektrometer (ICP-OES), wie in der Beschreibung angegeben, gemessen;
die Carbonsäure, die eine Kohlenstoff-Kohlenstoff-Doppelbindung enthält, ist eine oder mehrere aus der Gruppe ausgewählt, die aus Sorbinsäure, 2-Hexensäure, 3-Hexensäure, Butendisäure, Vinylessigsäure, Vinylpropionsäure, Vinylglykolsäure und Zimtsäure besteht; die gesättigte Monocarbonsäure ist eine oder mehrere aus der Gruppe ausgewählt, die aus Ameisensäure, Essigsäure, Propionsäure, Buttersäure und Valeriansäure besteht.

8. Herstellungsverfahren nach Anspruch 7, wobei ein Gewichtsverhältnis von der gesättigten Monocarbonsäure zu der Carbonsäure, die eine Kohlenstoff-Kohlenstoff-Doppelbindung enthält, 1:0,2-0,8 beträgt.

9. Herstellungsverfahren nach Anspruch 7 oder 8, wobei die gesättigte Monocarbonsäure in einer Menge von 0,001-0,05 Gewichtsteilen und die Carbonsäure, die eine Kohlenstoff-Kohlenstoff-Doppelbindung enthält, in einer Menge von 0,001-0,01 Gewichtsteilen, bezogen auf 1 Gewichtsteil eines Ethylen-Vinylalkohol-Copolymers, verwendet wird.

10. Herstellungsverfahren nach einem der Ansprüche 7 bis 9, wobei das Kaliumsalz in einer solchen Menge zugegeben wird, dass die Gesamtmenge an Element Kalium und Element Natrium 800-1200 ppm, bezogen auf die Masse des Ethylen-Vinylalkohol-Copolymers, beträgt.

11. Herstellungsverfahren nach Anspruch 10, wobei das Kaliumsalz in einer solchen Menge zugegeben wird, dass das Massenverhältnis von Element Natrium zu Element Kalium 0,2:1 bis 0,5:1 beträgt.

12. Herstellungsverfahren nach Anspruch 10 oder 11, wobei das Verfahren ferner das Hinzufügen einer phosphorhaltigen Verbindung und/oder einer borhaltigen Verbindung zu dem Ethylen-Vinylacetat-Copolymer nach dem Säurebeizprozess umfasst; vorzugsweise werden die phosphorhaltige Verbindung und die borhaltige Verbindung in einer solchen Menge zugegeben, dass der Gehalt an Element Bor, berechnet als Borsäure H₃BO₃, 50-1000 ppm, mehr bevorzugt 300-500 ppm, beträgt, und der Gehalt an Element Phosphor, berechnet als H₃PO₄, 200-1000 ppm, mehr bevorzugt 500-800 ppm, beträgt, bezogen auf die Masse des Ethylen-Vinylalkohol-Copolymers;
der Gehalt an Element Bor wurde durch ein Atomabsorptionsspektrum gemessen, wie in der Beschreibung angegeben;
der Gehalt an Phosphatradikalen wurde durch eine Ionenchromatographie nachgewiesen, wie in der Beschreibung angegeben.

## Revendications

1. Composition de copolymère éthylène-alcool vinylique, la composition comprenant un copolymère éthylène-alcool vinylique, un élément de métal alcalin et un matériau contenant du carboxyle, **caractérisée en ce que** le matériau contenant du carboxyle comprend un acide carboxylique mono-saturé et un acide carboxylique contenant une double liaison carbone-carbone ;
l'élément de métal alcalin est l'élément potassium et l'élément sodium, la quantité totale d'élément potassium et d'élément sodium étant de 100 à 3 000 ppm par rapport à la masse du copolymère éthylène-alcool vinylique ;
un rapport en poids entre l'acide carboxylique mono-saturé et l'acide carboxylique contenant une double liaison carbone-carbone est de 1:0,1 à 1 ;
le rapport de masse entre l'élément sodium et l'élément potassium est de 0,1:1 à 1:1 ;
la teneur en acide carboxylique mono-saturé et en acide carboxylique contenant une double liaison carbone-carbone a été détectée par chromatographie ionique comme indiqué dans la description ;
les teneurs en élément potassium et en élément sodium ont été mesurées à l'aide d'un spectromètre d'émission atomique à plasma à couplage inductif (ICP-0ES), comme indiqué dans la description ;
l'acide carboxylique contenant une double liaison carbone-carbone est un ou plusieurs acides choisis dans le groupe constitué par l'acide sorbique, l'acide 2-hexénoïque, l'acide 3-hexénoïque, l'acide butènedioïque, l'acide vinylacétique, l'acide vinylpropionique, l'acide vinylglycolique et l'acide cinnamique ;
l'acide carboxylique mono-saturé est un ou plusieurs acides choisis dans le groupe constitué par l'acide formique, l'acide acétique, l'acide propionique, l'acide butyrique et l'acide valérique.

2. Composition selon la revendication 1, dans laquelle un rapport en poids entre l'acide carboxylique mono-saturé et l'acide carboxylique contenant une double liaison carbone-carbone est de 1:0,4 à 0,7.

3. Composition selon la revendication 1 ou 2, dans laquelle l'acide carboxylique mono-saturé est contenu dans une quantité de 50 à 2 000 ppm, de préférence de 200 à 800 ppm, par rapport à la masse du copolymère éthylène-alcool vinylique ; l'acide carboxylique contenant une double liaison carbone-carbone est contenu en une quantité de 20 à 2 000 ppm, de préférence de 150 à 250 ppm, par rapport à la masse du copolymère éthylène-alcool vinylique.

4. Composition selon l'une quelconque des revendications 1 à 3, dans laquelle la quantité totale de l'élément potassium et de l'élément sodium est de 800 à 1200 ppm par rapport à la masse du copolymère éthylène-alcool vinylique.

5. Composition selon la revendication 4, dans laquelle le rapport de masse entre l'élément sodium et l'élément potassium est compris entre 0,2:1 et 0,5:1.

6. Composition selon l'une quelconque des revendications 1 à 5, dans laquelle la composition comprend en outre un élément bore et/ou un élément phosphore ; la teneur en élément bore calculée en termes d'acide borique H₃BO₃ est de 50 à 1 000 ppm, de préférence de 300 à 500 ppm, et la teneur en élément phosphore calculée en termes de H₃PO₄ est de 200 à 1 000 ppm, de préférence 500 à 800 ppm, par rapport à la masse du copolymère éthylène-alcool vinylique ;
la teneur en élément bore a été mesurée par un spectre d'absorption atomique comme indiqué dans la description ;
la teneur en radical phosphate a été détectée par chromatographie ionique comme indiqué dans la description.

7. Procédé de préparation de la composition de copolymère éthylène-alcool vinylique, comprenant la soumission du copolymère éthylène-acétate de vinyle obtenu à partir de la réaction de polymérisation à une alcoolyse avec un hydroxyde de métal alcalin et à une granulation de moulage, suivie d'un lavage à l'eau et d'un décapage à l'acide séquentiellement, **caractérisé en ce que** l'acide utilisé dans le décapage à l'acide comprend un acide carboxylique mono-saturé et un acide carboxylique contenant une double liaison carbone-carbone ;
l'hydroxyde de métal alcalin utilisé pour l'alcoolyse est l'hydroxyde de sodium, le procédé comprend en outre l'ajout d'un sel de potassium au copolymère éthylène-acétate de vinyle après le processus de décapage à l'acide, le sel de potassium est ajouté en une quantité telle que la quantité totale de l'élément potassium et de l'élément sodium est de 100 à 3 000 ppm ;
le sel de potassium est ajouté en quantité telle que le rapport massique entre l'élément sodium et l'élément potassium est compris entre 0,1:1 et 1:1 ;
un rapport en poids entre l'acide carboxylique mono-saturé et l'acide carboxylique contenant une double liaison carbone-carbone est de 1:0,1 à 1 ;
la teneur en acide carboxylique mono-saturé et en acide carboxylique contenant une double liaison carbone-carbone a été détectée par chromatographie ionique comme indiqué dans la description ;
les teneurs en élément potassium et en élément sodium ont été mesurées à l'aide d'un spectromètre d'émission atomique à plasma à couplage inductif (ICP-OES), comme indiqué dans la description ;
l'acide carboxylique contenant une double liaison carbone-carbone est un ou plusieurs acides choisis dans le groupe constitué par l'acide sorbique, l'acide 2-hexénoïque, l'acide 3-hexénoïque, l'acide butènedioïque, l'acide vinylacétique, l'acide vinylpropionique, l'acide vinylglycolique et l'acide cinnamique ;
l'acide carboxylique mono-saturé est un ou plusieurs acides choisis dans le groupe constitué par l'acide formique, l'acide acétique, l'acide propionique, l'acide butyrique et l'acide valérique.

8. Procédé de préparation selon la revendication 7, dans lequel un rapport en poids entre l'acide carboxylique mono-saturé et l'acide carboxylique contenant une double liaison carbone-carbone est de 1:0,2 à 0,8.

9. Procédé de préparation selon la revendication 7 ou 8, dans lequel l'acide carboxylique mono-saturé est utilisé en une quantité de 0,001 à 0,05 partie en poids et l'acide carboxylique contenant une double liaison carbone-carbone est utilisé à raison de 0,001 à 0,01 partie en poids, par rapport à 1 partie en poids d'un copolymère d'éthylène-alcool vinylique.

10. Procédé de préparation selon l'une quelconque des revendications 7 à 9, dans lequel le sel de potassium est ajouté en quantité telle que une quantité totale de l'élément potassium et de l'élément sodium est de 800 à 1200 ppm par rapport à la masse du copolymère éthylène-alcool vinylique.

11. Procédé de préparation selon la revendication 10, dans lequel le sel de potassium est ajouté en une quantité telle que le rapport de masse entre l'élément sodium et l'élément potassium est de 0,2:1 à 0,5:1.

12. Procédé de préparation selon la revendication 10 ou 11, dans lequel le procédé comprend en outre l'ajout d'un composé contenant du phosphore et/ou d'un composé contenant du bore au copolymère éthylène-acétate de vinyle après le processus de décapage à l'acide ; de préférence, le composé contenant du phosphore et le composé contenant du bore sont ajoutés en une quantité telle que la teneur en élément bore calculée en termes d'acide borique H₃BO₃ est de 50 à 1 000 ppm, de préférence de 300 à 500 ppm, et la teneur en élément phosphore calculée en termes de H₃PO₄ est de 200 à 1 000 ppm, de préférence de 500 à 800 ppm, par rapport à la masse du copolymère d'éthylène-alcool vinylique ;
la teneur en élément bore a été mesurée par un spectre d'absorption atomique comme indiqué dans la description ;
la teneur en radical phosphate a été détectée par chromatographie ionique comme indiqué dans la description.
